# EUROPÄISCHE PATENTANMELDUNG

(11) **EP 2 428 589 A2**
(43) Veröffentlichungstag der Anmeldung: **14.03.2012**
(21) Anmeldenummer: 11180497.7
(22) Anmeldetag: 08.09.2011
(51) Int. Cl.: C21D 1/673, C21D 6/00, C21D 6/04, C21D 9/00, B29C 33/38

(54) **Verfahren zur Herstellung einer Legeform für die Fertigstellung von Bauteilen**

(30) Priorität: 14.09.2010 DE 102010040698
(71) Anmelder: Grunewald GmbH & Co. KG, 46395 Bocholt (DE)
(72) Erfinder: Bisping, Hans-Jürgen, 46399 Bocholt (DE)
(74) Vertreter: Albrecht, Ralf

(57) **Zusammenfassung**

Die Erfindung betrifft ein Verfahren zur Herstellung einer Legeform (1) für die Fertigung von Bauteilen aus kohlefaserverstärktem Kunststoff, wobei die Legeform (1) ein Werkzeugdeckblech (3) mit einer dreidimensionalen Oberflächenkontur aufweist, die der Negativkontur des zu fertigenden Bauteils entspricht, und wobei das Werkzeugdeckblech (3) aus einem Blech (4) hergestellt wird, das aus Metall, insbesondere einem Eisen-Nickel-Material besteht, wobei das Blech (4) gänzlich oder im Wesentlichen ohne spanabhebende Bearbeitung hergestellt wird, indem das Blech (4) zunächst warm umgeformt und anschließend durch Kaltumformung in seine Endform mit der gewünschten Oberflächenkontur gebracht wird, wobei das Blech (4) vor der Warmumformung auf eine Temperatur von 700°C bis 1200°C erhitzt und vor der Kaltumformung auf eine Temperatur von 10°C bis 600°C abgekühlt wird.

## Beschreibung

Die vorliegende Erfindung betrifft ein Verfahren zur Herstellung einer Legeform für die Fertigung von Bauteilen aus kohlefaserverstärktem Kunststoff, wobei die Legeform ein Werkzeugdeckblech mit einer dreidimensionalen Oberflächenkontur aufweist, die der Negativkontur des zu fertigenden Bauteils entspricht, und wobei das Werkzeugdeckblech aus einem Blech hergestellt wird, das aus Metall, insbesondere einem Eisen-Nickel-Material besteht.

Bauteile aus kohlefaserverstärktem Kunststoff (CFK-Bauteile) zeichnen sich durch eine hohe Festigkeit bei einem gleichzeitig geringem Gewicht aus, weshalb sie insbesondere im Motorsport und in der Luft- und Raumfahrt eingesetzt werden. Deshalb werden an CFK-Bauteile in puncto Formtoleranz und Passgenauigkeit sehr hohe Anforderungen gestellt. Des Weiteren muss das Bauteil frei von Poren und Spannungen sein, die unter Belastung zu vorzeitigen Schädigungen führen können.

Der verbreitete und bewährte Herstellungsprozess für solche CFK-Bauteile ist das Prepreg-Verfahren. Bei diesem Verfahren werden mit einem Harz imprägnierte CFK-Gewebematten, die sogenannten Prepregs, in eine Legeform gelegt und anschließend luftdicht abgedeckt sowie evakuiert. Danach werden die CFK-Gewebematten in einem Autoklaven unter einem Druck von etwa 10 bar und bei einer Temperatur von ca. 180°C ausgehärtet.

Um schädliche innere Spannungen im CFK-Bauteil, die durch unterschiedliche thermische Schrumpfung von Legeform und Bauteil beim Abkühlen nach der Aushärtung des CFK-Gewebes entstehen können, zu verhindern, muss das Material der Legeform ein annähernd gleiches thermisches Ausdehnungsverhältnis wie CFK haben. Ursprünglich wurde die Legeform daher ebenfalls aus kohlefaserverstärktem Kunststoff hergestellt. Allerdings hat sich gezeigt, dass die Verschleißfestigkeit von CFK-Legeformen ungenügend ist.

Aus diesem Grund kommen häufig Legeformen zum Einsatz, bei denen das sogennante Werkzeugdeckblech, das die zu der Negativkontur des zu fertigenden Bauteils korrespondierende dreidimensionale Oberflächenkontur aufweist, aus einer Eisen-Nickel-Legierung besteht, die ein sehr ähnliches thermisches Ausdehnungsverhältnis wie kohlefaserverstärkte Kunststoffe aufweist.

Für die Herstellung des Werkzeugdeckblechs wird als Ausgangsprodukt ein Eisen-Nickel-Blech mit einer Materialdicke von 8 mm bis 40 mm gewählt. Sind großflächige Legeformen herzustellen, werden mehrere Bleche zu einem Werkzeugdeckblech miteinander verschweißt. Danach wird das Werkzeugdeckblech auf einen fachwerkartigen Unterbau geschweißt und entspannungsgeglüht, um die durch die Schweißprozesse eingebrachten Spannungen im Gefüge zu beseitigen. Anschließend wird die Legeform kontrolliert abgekühlt, um weitere Spannungen im Gefüge durch Temperaturgradienten zu vermeiden. Schließlich wird in die Oberseite des Werkzeugdeckblechs die dreidimensionale Oberflächenkontur, die der Negativkontur des zu fertigenden Bauteils entspricht, gefräst.

Mit anderen Worten wird bei dem vorbekannten Verfahren das Werkzeugdeckblech durch spanabhebende Bearbeitung eines Vollmaterials hergestellt. Dadurch ist das Werkzeugdeckblech sehr schwer und schlecht handzuhaben. Zudem ist die erzielbare Tiefe der Negativkontur durch die Materialdicke des Werkzeugdeckblechs beschränkt. Außerdem wird durch die spanabhebende Bearbeitung Material verschwendet. Schließlich besitzt das fertige Werkzeugdeckblech eine ungleichmäßige Wandstärke, wodurch sich für das Werkzeugdeckblech ein langer und ungleichmäßiger Aufheiz- und Abkühlzyklus im Autoklaven ergibt.

Des Weiteren ist nachteilig, dass größere Werkzeugdeckbleche aus mehreren miteinander verschweißten Blechen bestehen. Zum Einen können die Schweißnähte im Gebrauch undicht werden, zum Anderen kann die durch Schweißungen lokal eingebrachte Wärme in den Schweißnahtbereichen zu veränderten Gefügebedingungen und zu einem Verzug der Bleche führen.

Es ist daher Aufgabe der vorliegenden Erfindung, ein Verfahren der eingangs genannten Art anzugeben, mit dem eine verschleißbeständige und langlebige Legeform hergestellt werden kann, die leichter ist und kürzere Aufheiz- und Abkühlzyklen im Autoklaven benötigt.

Diese Aufgabe ist erfindungsgemäß bei dem Verfahren der eingangs genannten Art dadurch gelöst, dass das Blech gänzlich oder im Wesentlichen ohne spanabhebende Bearbeitung hergestellt wird, indem das Blech zunächst warm umgeformt und anschließend durch Kaltumformung in seine Endform mit der gewünschten Oberflächenkontur gebracht wird, wobei das Blech vor der Warmumformung auf eine Temperatur von 700°C bis 1200°C erhitzt und vor der Kaltumformung auf eine Temperatur von 10°C bis 600°C abgekühlt wird.

Der Erfindung liegt damit die Überlegung zugrunde, auf eine spanabhebende Bearbeitung möglichst vollständig zu verzichten, sondern das Werkzeugdeckblech durch Umformungsschritte herzustellen. Lediglich lokale Nachbesserungen beispielsweise in Form von Schleifarbeiten können notwendig sein. Die erfindungsgemäße Herstellung des Werkzeugdeckblechs allein durch Umformungsschritte bietet den Vorteil, dass Oberflächenkonturen mit Höhenunterschieden hergestellt können, die über die Materialdicke des Ausgangsbleches hinaus gehen, so dass auch aus relativ dünnen Ausgangsblechen relativ stark konturierte Werkzeugdeckbleche hergestellt werden können. Abgesehen von den Materialstreckungen und -stauchungen, die auf den Umformungsprozess zurückgehen, besitzt das Werkzeugdeckblech eine nahezu gleichmäßige Wandstärke. Im Ergebnis können mit dem erfindungsgemäßen Verfahren relativ dünne und damit leichte Werkzeugdeckbleche hergestellt werden, die einfach zu handhaben sind, weshalb auch relativ große Werkzeugdeckbleche aus einem einzigen Ausgangsblech unter Verzicht auf die bisher erforderlichen Schweißungen hergestellt werden können. Schließlich werden aufgrund des geringen Gewichts und der gleichmäßigen Wandstärken kurze und gleichmäßige Aufheiz- und Abkühlzyklen ermöglicht. Insgesamt ermöglicht das erfindungsgemäße Verfahren ein wirtschaftlich effizientes Herstellen der Legeform in Serienfertigung.

Erfindungsgemäß wird das Blech in einem ersten Schritt warm umgeformt und in einem zweiten Schritt kalt umgeformt. Durch die Warmumformung, die bei einer Arbeitstemperatur oberhalb der Rekristallisationstemperatur von Eisen-Nickel-Legierungen durchgeführt wird, ist eine große Umformbarkeit des Ausgangsproduktes mit geringen Umformkräften möglich. Zudem ändert sich die Festigkeit und die Bruchdehnung des umgeformten Blechs nur wenig und das Gefüge wird nicht verfestigt. Durch die sich anschließende Kaltumformung, die bei einer Arbeitstemperatur unterhalb der Rekristalisationstemperatur von Eisen-Nickel-Legierungen durchgeführt wird, ist es möglich, eine hohe Passgenauigkeit und eine enge Formtoleranz der dreidimensionalen Oberflächenkontur herzustellen. Darüber hinaus wird die Festigkeit erhöht und die Bruchdehnung des kalt umgeformten Werkzeugblechs verringert.

In bevorzugter Weise ist vorgesehen, dass das Blech vor der Warmumformung auf eine Temperatur von 800°C bis 1050°C beispielsweise in einem Glühofen erhitzt wird. Dadurch wurden besonders gute Herstellungsergebnisse erzielt.

In Weiterbildung des erfindungsgemäßen Verfahrens wird das Blech mittels Formwerkzeugen warm und/oder kalt umgeformt, die eine formgebende Matrize und eine Patrize umfassen. Dies ermöglicht ein wirtschaftlich effizientes Herstellen der Legeform in Serienfertigung.

Nach der Warmumformung kann das Blech in einem flüssigen oder gasförmigen Medium, das eine Temperatur von -100°C bis 100°C aufweist, abgekühlt werden. In bevorzugter Weise wird als gasförmiges Kühlmedium Umgebungsluft mit einer Temperatur von -20°C bis 40°C eingesetzt. Auf diese Weise kann das Blech kontrolliert abkühlen, wodurch Spannungen im Gefüge aufgrund von Temperaturgradienten vermieden werden.

In vorteilhafter Weise kann das Blech neben Eisen folgende Mengenanteile aufweisen (in Gew.-%): bis zu 37,0% Ni, bis zu 0,25% Cr, bis zu 0,15% C, bis zu 0,60% Mn, bis zu 0,40% Si, bis zu 0,50% Co, bis zu 0,025% P und bis zu 0,025% S. Vor allem Ni36-Legierungen weisen ein sehr ähnliches thermisches Ausdehnungsverhältnis wie kohlefaserverstärkte Kunststoffe auf und eignen sich somit besonders für die Herstellung einer Legeform für die Fertigung von Bauteilen aus CFK.

Nach der Kaltumformung kann das Werkzeugdeckblech mit einem Unterbau verschweißt werden. Somit erhalten insbesondere größere Legeformen Halt und Stabilität und können als Ganzes in einem Autoklaven eingebracht werden, ohne dass weitere Vorrichtungen für das Abstellen des Werkzeugdeckblechs notwendig sind.

Im Anschluss an die Kaltumformung und/oder nach der Verschweißung mit dem Unterbau kann das Werkzeugdeckblech in bevorzugter Weise bei einer Temperatur von 200°C bis 400°C, insbesondere von 320°C getempert werden. Dadurch werden die durch die Schweißprozesse eingebrachten Spannungen im Gefüge beseitigt.

Hinsichtlich weiterer Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: eine Legeform gemäß der vorliegenden Erfindung in Schnittdarstellung,
- Figur 2: ein Werkzeugdeckblech gemäß der vorliegenden Erfindung in perspektivischer Darstellung, und
- Figur 3: ein Formwerkzeug gemäß der vorliegenden Erfindung in Schnittdarstellung.

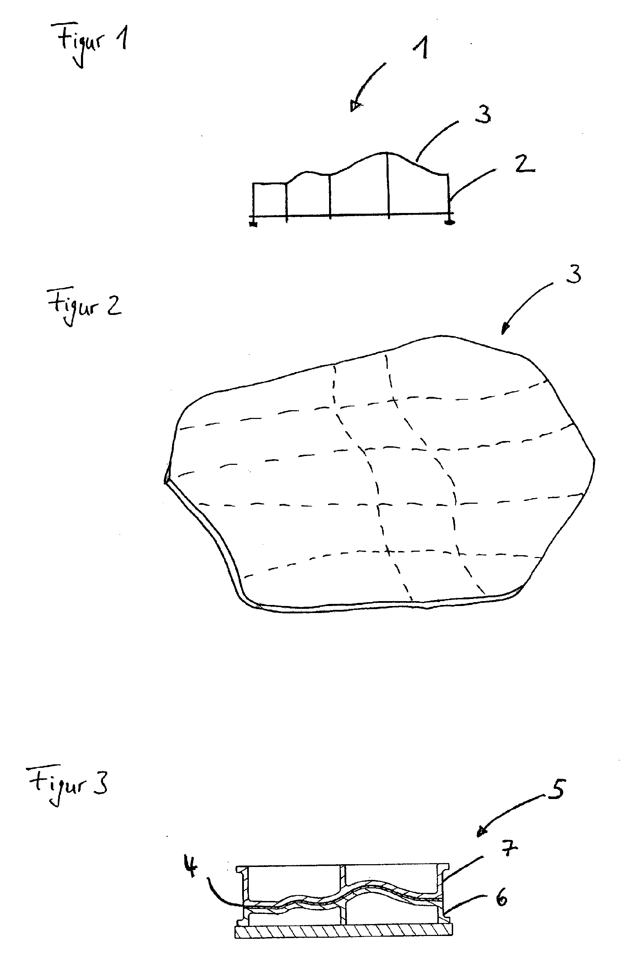

In der Figur 1 ist eine Legeform 1 für die Fertigung von Bauteilen aus kohlefaserverstärktem Kunststoff (CFK) dargestellt. Die Legeform 1 besteht aus einem Unterbau 2 und einem mit der Oberseite des Unterbaus 2 verschweißten Werkzeugdeckblech 3. In der Figur 2 ist deutlich erkennbar, dass das Werkzeugdeckblech 3 eine dreidimensionale Oberflächenkontur aufweist, die der Negativkontur eines beispielsweise nach einem Prepreg-Verfahren zu fertigenden Bauteils entspricht. Bei diesem Verfahren werden mit einem Harz imprägnierte CFK-Gewebematten, die sogenannten Prepregs, auf das Werkzeugdeckblech 3 gelegt. Anschließend wird die Legeform 1 luftdicht abgedeckt, evakuiert und in einen Autoklaven eingebracht. Dort härten die CFK-Gewebematten unter einem Druck von etwa 10 bar und bei einer Temperatur von ca. 180°C aus.

Zur Herstellung des Werkzeugdeckblechs 3 der Legeform 1 wird ein Blech 4 aus einem Eisen-Nickel-Material, insbesondere aus einem Ni36-Material, zunächst warm und danach kalt umgeformt.

Konkret wird ein Blech 4 mit einer Materialdicke von beispielsweise 5 mm in einen kalten Glühofen gelegt. Der Glühofen wird innerhalb ca. einer Stunde auf eine Ofentemperatur von 930°C erhitzt, wobei die Temperatur am Blech 4 gemessen wird. Alternativ kann das Blech 4 auch in einen bereits vorgewärmten Glühofen eingelegt werden.

Anschließend wird das Blech 4 mit einer Temperatur von mehr als 800°C aus dem Glühofen entnommen und in das Formwerkzeug 5 gelegt, wo es mit einer Presskraft je nach Größe und Dicke von 100 t bis 600 t warm umgeformt wird. Die Presskraft wird für etwa eine Minute aufrecht gehalten. Bereits während der Warmumformung kühlt das Blech 4 um ca. 300°C ab.

Im Anschluss an die Warmumformung wird das Blech 4 aus dem Formwerkzeug 5 entnommen und an der Umgebungsluft unter die Rekristallisationstemperatur von Ni36 abgekühlt. Danach wird das Blech 4 mit einer Temperatur von etwa 15°C erneut in ein Formwerkzeug 5 eingelegt und durch Kaltumformung in seine Endkontur mit der gewünschten Oberflächenkontur gebracht.

Die jeweiligen Umformungsschritte des Blechs 4 können mittels herkömmlicher Pressen durchgeführt werden. In der Figur 3 ist ein herkömmliches Formwerkzeug 5 einer Presse dargestellt, das ein Unterteil 6 und ein Oberteil 7 aufweist, zwischen denen das Blech 4 angeordnet ist.

Schließlich wird das so hergestellte Werkzeugdeckblech 3 bei einer Temperatur von etwa 320°C getempert, d.h. entspannungsgeglüht. Nachdem das Werkzeugdeckblech 3 an Umgebungsluft abgekühlt ist, wird es mit dem Unterbau 2 verschweißt. Abschließend wird die Legeform 1 bei einer Temperatur von etwa 320°C getempert, um die durch die Schweißungen eingebrachten Spannungen im Gefüge zu beseitigen.

## Patentansprüche

1. Verfahren zur Herstellung einer Legeform (1) für die Fertigung von Bauteilen aus kohlefaserverstärktem Kunststoff, wobei die Legeform (1) ein Werkzeugdeckblech (3) mit einer dreidimensionalen Oberflächenkontur aufweist, die der Negativkontur des zu fertigenden Bauteils entspricht, und wobei das Werkzeugdeckblech (3) aus einem Blech (4) hergestellt wird, das aus Metall, insbesondere einem Eisen-Nickel-Material besteht, **dadurch gekennzeichnet, dass** das Blech (4) gänzlich oder im Wesentlichen ohne spanabhebende Bearbeitung hergestellt wird, indem das Blech (4) zunächst warm umgeformt und anschließend durch Kaltumformung in seine Endform mit der gewünschten Oberflächenkontur gebracht wird, wobei das Blech (4) vor der Warmumformung auf eine Temperatur von 700°C bis 1200°C erhitzt und vor der Kaltumformung auf eine Temperatur von 10°C bis 600°C abgekühlt wird.

2. Verfahren nach Anspruch 1, **dadurch gekennzeichnet, dass** das Blech (4) vor der Warmumformung auf eine Temperatur von 800°C bis 1050°C erhitzt wird.

3. Verfahren nach Anspruch 1 oder 2, **dadurch gekennzeichnet, dass** das Blech (4) in einem Glühofen erhitzt wird.

4. Verfahren nach einem der vorherigen Ansprüche, **dadurch gekennzeichnet, dass** das Blech (4) mittels eines Formwerkzeuges (5) warm umgeformt wird, das eine formgebende Matrize (7) und eine Patrize (6) umfasst.

5. Verfahren nach einem der vorherigen Ansprüche, **dadurch gekennzeichnet, dass** das Blech (4) nach der Warmumformung in einem flüssigen oder gasförmigen Medium, das eine Temperatur von -100°C bis 100°C aufweist, abgekühlt wird.

6. Verfahren nach Anspruch 5, **dadurch gekennzeichnet, dass** als gasförmiges Kühlmedium Umgebungsluft mit einer Temperatur von -20°C bis 40°C eingesetzt wird.

7. Verfahren nach einem der vorherigen Ansprüche, **dadurch gekennzeichnet, dass** das Blech (4) mittels eines Formwerkzeuges (5) kalt umgeformt wird, das eine formgebende Matrize (7) und eine Patrize (6) umfasst.

8. Verfahren nach einem der vorherigen Ansprüche, **dadurch gekennzeichnet, dass** das Blech (4) neben Eisen in folgenden Mengenanteilen aufweist (in Gew.-%): bis zu 37,0% Ni, bis zu 0,25% Cr, bis zu 0,15% C, bis zu 0,60% Mn, bis zu 0,40% Si, bis zu 0,50% Co, bis zu 0,025% P und bis zu 0,025% S.

9. Verfahren nach einem der vorherigen Ansprüche, **dadurch gekennzeichnet, dass** das Blech (4) eine Materialdicke von 5 mm bis 25 mm aufweist.

10. Verfahren nach einem der vorherigen Ansprüche, **dadurch gekennzeichnet, dass** das Werkzeugdeckblech (3) nach der Kaltumformung mit einem Unterbau (2) verschweißt wird.

11. Verfahren nach einem der vorherigen Ansprüche, **dadurch gekennzeichnet, dass** das Werkzeugdeckblech (3) im Anschluss an die Kaltumformung und/oder nach der Verschweißung mit dem Unterbau (2) bei einer Temperatur von 200°C bis 400°C, insbesondere von 320°C getempert wird.
